# EUROPÄISCHE PATENTSCHRIFT

(11) **EP 3 847 735 B1**
(45) Veröffentlichungstag und Bekanntmachung des Hinweises auf die Patenterteilung: **23.02.2022**
(21) Anmeldenummer: 20747410.7
(22) Anmeldetag: 30.07.2020
(51) Int. Cl.: H02J 50/00, H02J 50/10, H02J 7/00

(54) **LADEVORRICHTUNG ZUM DRAHTLOSEN AUFLADEN EINES ELEKTRISCHEN ENERGIESPEICHERS EINES MOBILEN ENDGERÄTS FÜR EIN KRAFTFAHRZEUG SOWIE KRAFTFAHRZEUG MIT EINER LADEVORRICHTUNG**
CHARGING DEVICE FOR WIRELESSLY CHARGING AN ELECTRIC ENERGY STORE OF A MOBILE TERMINAL FOR A MOTOR VEHICLE, AND MOTOR VEHICLE COMPRISING A CHARGING DEVICE
DISPOSITIF DE CHARGE POUR VÉHICULE AUTOMOBILE DESTINÉ À RECHARGER SANS FIL UN ACCUMULATEUR D'ÉNERGIE ÉLECTRIQUE D'UN TERMINAL MOBILE, ET VÉHICULE AUTOMOBILE COMPRENANT UN DISPOSITIF DE CHARGE

(30) Priorität: 01.08.2019 DE 102019211519
(43) Veröffentlichungstag der Anmeldung: 14.07.2021
(73) Patentinhaber: Audi AG, 85045 Ingolstadt (DE)
(72) Erfinder: WEIß, Simon, 85135 Titting (DE); THIEL, Holger, 85139 Wettstetten (DE)
(86) Internationale Anmeldenummer: PCT/EP2020/071488
(87) Internationale Veröffentlichungsnummer: WO 2021/019004

(56) Entgegenhaltungen:
- WO-A1-2017/190603
- DE-A1-102014 009 724
- DE-U1-202017 107 183
- KR-A- 20140 065 090
- US-A1- 2019 215 984

## Beschreibung

Die Erfindung betrifft eine Ladevorrichtung zum drahtlosen Aufladen eines elektrischen Energiespeichers eines mobilen Endgeräts für ein Kraftfahrzeug sowie ein Kraftfahrzeug mit einer solchen Ladevorrichtung.

Ladevorrichtungen zum drahtlosen Aufladen, insbesondere zum induktiven Laden mobiler Kommunikationsgeräte oder im Allgemeinen mobiler Endgeräte, sind aus dem Stand der Technik bekannt. Dabei kann ein mobiles Endgerät beispielsweise auf eine Auflagefläche einer solchen Ladevorrichtung aufgelegt werden und mittels eines durch eine Primärspule der Ladevorrichtung erzeugten magnetischen Wechselfelds ein Ladestrom in eine Sekundärspule, die sich im mobilen Endgerät befindet, induziert werden und dadurch ein elektrischer Energiespeicher des mobilen Endgeräts, das heißt ein Akkumulator, geladen werden.

Bei solchen Ladevorgängen entsteht unweigerlich Verlustwärme. Diese führt zur Erwärmung der Ladeelektronik der Ladevorrichtung sowie auch zur Erwärmung des mobilen Endgeräts. Bekanntermaßen verfügen mobile Endgeräte, wie zum Beispiel Mobiltelefone, Smartphones, Tablet-PCs, oder ähnliches, über eine eigene Temperaturüberwachung, wodurch ab Erreichen oder Überschreiten einer vorgebbaren Grenztemperatur bei dem mobilen Endgerät die Prozessorleistung verringert und/oder die Ladestromstärke begrenzt wird. Wird diese Grenztemperatur um einen vorgebbaren Wert überschritten, werden die mobilen Endgeräte vollständig abgeschaltet, um eine Beschädigung des mobilen Endgeräts oder Komponenten davon zu verhindern. Die durch den Ladevorgang bedingte Erwärmung des mobilen Endgeräts kann die Dauer des Ladevorgangs damit unter Umständen enorm in die Länge ziehen. Um einer zu starken Erwärmung eines mobilen Endgeräts entsprechend beim Ladevorgang entgegenzuwirken, kommen üblicherweise in Ladevorrichtungen Kühlmechanismen, wie zum Beispiel Lüfter, zum Einsatz.

Aus der DE 10 2015 112 127 A1 ist eine Integrationseinrichtung zur Integration eines mobilen Endgeräts in ein Fahrzeug bekannt, welche eine Elektronikeinheit und eine Ablageeinheit umfasst, wobei die Elektronikeinheit eine induktive Ladeeinheit umfasst, mit welcher das mobile Endgerät ladbar ist, und wobei die Ablageeinheit eine Ablagematte umfasst, auf welche das mobile Endgerät ablegbar ist.

Aus der DE 10 2016 216 900 B3 ist eine Ladevorrichtung zum drahtlosen Aufladen eines wiederaufladbaren elektrischen Energiespeichers eines mobilen Endgeräts mit einem Gehäuse bekannt, die eine aktive Luftzufuhreinrichtung aufweist, die dazu eingerichtet ist, einem Kühlkörper einströmbare Umgebungsluft zuzuführen und in Richtung eines auf eine Auflagefläche der Ladevorrichtung liegenden mobilen Endgeräts zu leiten.

Aus der DE 10 2018 207 841 B3 ist ein Verfahren zum Betreiben einer Lüftungseinrichtung zum Bereitstellen eines Luftstroms bekannt.

Aus der DE 20 2017 107 183 U1 ist eine Ladevorrichtung zum drahtlosen Aufladen eines mobilen Endgerätes bekannt, aufweisend einen Auflagebereich zur Auflage des mobilen Endgerätes, wobei der Auflagebereich wenigstens einen Teilbereich einer Oberseite der Ladevorrichtung bildet, eine Kühleinrichtung umfassend einen Lüfter, mindestens einen Ansaugkanal mit mindestens einer Ansaugöffnung zum Ansaugen von Luft aus der Umgebung der Ladevorrichtung zur Kühleinrichtung mittels des Lüfters, wobei die mindestens eine Ansaugöffnung derart angeordnet ist, dass Luft von oberhalb der Oberseite der Ladevorrichtung ansaugbar ist, und mindestens einen Auslasskanal mit mindestens einer, dem Auflagebereich zugeordneten Auslassöffnung zum Führen von Luft von der Kühleinrichtung zu dem auf dem Auflagebereich angeordneten mobilen Endgerät zur Kühlung des mobilen Endgeräts.

Aus der DE 10 2014 009 724 A1 ist eine Aufladevorrichtung für einen Kraftwagen bekannt, mit wenigstens einer Ladeeinheit zum Aufladen eines elektronischen Gerätes, und einer Auflagefläche, wobei zwischen der Ladeeinheit und der Auflagefläche ein im Wesentlichen wellenförmiges Strukturelement mit einer Mehrzahl von Öffnungen angeordnet ist, welche mittels in die Auflagevorrichtung eingebrachter Kühlluft durchströmbar sind.

Aus der KR 2014 0065090 A sind ein Apparat und ein Verfahren zum drahtlosen Aufladen bekannt.

Es ist Aufgabe der vorliegenden Erfindung, eine im Vergleich zum Stand der Technik verbesserte Ladevorrichtung zum drahtlosen Aufladen eines elektrischen Energiespeichers eines mobilen Endgeräts in einem Kraftfahrzeug bereitzustellen.

Diese Aufgabe wird durch die Merkmale der unabhängigen Patentansprüche gelöst. Vorteilhafte Weiterbildungen und Ausgestaltungen der Erfindung sind durch die Unteransprüche, die Beschreibung und die Figuren offenbart.

Durch die Erfindung ist eine Ladevorrichtung zum drahtlosen Aufladen eines elektrischen Energiespeichers eines mobilen Endgeräts für ein Kraftfahrzeug bereitgestellt, wobei die Ladevorrichtung eine Ladeelektronik und ein Gehäuse, in welchem die Ladeelektronik angeordnet ist, aufweist. Das Gehäuse weist einen Auflagebereich zum Auflegen des mobilen Endgeräts auf, wobei der Auflagebereich mindestens zwei sich in Richtung der Länge des Auflagebereichs erstreckende Erhebungen mit einer jeweiligen ersten vorbestimmten Höhe aufweist, die parallel mit einem vorbestimmten Abstand zueinander angeordnet sind und bei aufgelegtem mobilen Endgerät einen Luftkanal bilden. Das Gehäuse weist mindestens eine Lufteintrittsöffnung und mindestens eine Luftaustrittsöffnung auf, wobei die Luftaustrittsöffnung in dem Auflagebereich angeordnet und dazu ausgebildet ist, Luft in den Luftkanal auszublasen, wobei zumindest eine Barriere in dem Luftkanal angeordnet ist, die dazu ausgebildet ist, die in den Luftkanal ausgeblasene Luft zu verwirbeln.

Mit anderen Worten ist in einem Kraftfahrzeug eine Ladevorrichtung bereitgestellt, die eine Ladeelektronik in einem Gehäuse umfasst. Die Ladeelektronik kann dabei eine Primärspule umfassen, die ein Magnetfeld erzeugt, durch welches ein Strom in einer Sekundärspule des mobilen Endgeräts induziert wird und somit der elektrische Energiespeicher des mobilen Endgeräts geladen werden kann. Die Ladeelektronik kann in einem Gehäuse in dem Kraftfahrzeug bereitgestellt sein, insbesondere kann das Gehäuse in einer Mittelkonsole des Kraftfahrzeugs angeordnet sein. Auf dem Gehäuse kann ein Auflagebereich zum Auflegen und induktiven Laden des mobilen Endgeräts vorgesehen sein, wobei der Auflagebereich in einer Längsrichtung mindestens zwei Erhebungen aufweist, die jeweils eine gleiche erste vorbestimmte Höhe aufweisen und die mit einem vorbestimmten Abstand parallel zueinander verlaufen. Beispielsweise kann die erste vorbestimmte Höhe ein bis zwei Millimeter, vorzugsweise 1,2 Millimeter, betragen und der vorbestimmte Abstand kann kleiner als eine Breite des mobilen Endgeräts sein. Beispielsweise kann der vorbestimmte Abstand in einem Bereich von vier bis sieben Zentimetern liegen, insbesondere bei fünf Zentimetern. Ein mobiles Endgerät kann beispielsweise ein Mobiltelefon, ein Smartphone, einen Laptop oder einen Tablet-PC umfassen.

Das auf den Auflagebereich, insbesondere auf die mindestens zwei sich in Richtung der Länge des Auflagebereichs erstreckenden Erhebungen, aufgelegte mobile Endgerät bildet mit dem Auflagebereich einen Luftkanal, das heißt einen Tunnel durch den ein Luft durchströmen kann, der seitlich von den mindestens zwei Erhebungen, nach unten durch den Auflagebereich und nach oben durch das mobile Endgerät abgegrenzt ist.

Ferner weist das Gehäuse mindestens eine Lufteintrittsöffnung auf, durch die Luft in das Gehäuse eingeleitet werden kann, und eine Luftaustrittsöffnung, durch die die in das Gehäuse eingeleitete Luft ausgeblasen werden kann. Hierfür kann beispielsweise eine Luftfördereinrichtung, wie zum Beispiel ein Lüfter, vorgesehen sein, die den Luftstrom zum Einleiten und Ausblasen der Luft erzeugt. Die Luftaustrittsöffnung kann insbesondere derart in dem Auflagebereich angeordnet sein, dass die Luft der Luftaustrittsöffnung in den Luftkanal ausgeblasen wird. Vorzugsweise kann hierfür die Luftaustrittsöffnung an einem Ende des Luftkanals angeordnet sein, sodass die Luft aus der Luftaustrittsöffnung durch den gesamten Luftkanal hindurchströmt. Möglich ist jedoch auch eine mittige Anordnung der Luftaustrittsöffnung in dem Luftkanal, sodass Luft aus der Luftaustrittsöffnung von der Mitte des Luftkanals zu beiden Längsseiten des Luftkanals ausgeblasen wird.

Des Weiteren ist vorgesehen, dass die in den Luftkanal ausgeblasene Luft durch eine Barriere in dem Luftkanal verwirbelt wird. Hierzu kann beispielsweise eine Erhebung und/oder Vertiefung in dem Luftkanal angeordnet sein, die ganz oder teilweise in einer Breite und/oder Länge des Luftkanals angeordnet ist. Beispielsweise kann eine als Stufe ausgebildete Barriere oder eine gitterförmige Barriere vorgesehen sein, die Luft, die durch die Barriere strömt, verwirbelt. Die Barriere kann auch mehrere Verwirbelungselemente auf dem Auflagebereich im Luftkanal umfassen, beispielsweise mehrere Verwirbelungserhebungen. Durch die Barriere können innerhalb des Luftkanals Luftwirbel erzeugt werden, wodurch eine turbulente Strömung entsteht. Diese kann im Gegensatz zu einer laminaren Strömung mehr Wärme aufnehmen, da nicht nur die nächstliegenden Luftschichten Wärme aufnehmen und abtransportieren.

Es ist vorgesehen, dass die zumindest eine Barriere eine erste Verwirbelungserhebung umfasst, die senkrecht zu den sich in Richtung der Länge des Auflagebereichs erstreckenden Erhebungen angeordnet ist. Mit anderen Worten kann ein Balken, eine Stufe oder ein Plateau als erste Verwirbelungserhebung im Luftkanal angeordnet sein, dessen Kante senkrecht zu den Seitenwänden des Luftkanals angeordnet ist. Hierdurch ergibt sich der Vorteil, dass Luft, die auf die erste Verwirbelungserhebung trifft, gleichmäßig verwirbelt werden kann, wodurch in einem Bereich hinter der ersten Verwirbelungserhebung eine verbesserte Kühlleistung erreicht werden kann.

Es ist vorgesehen, dass die erste Verwirbelungserhebung sich in der Breite über den vorbestimmten Abstand des Luftkanals erstreckt. Mit anderen Worten reicht die erste Verwirbelungserhebung über die gesamte Breite des Luftkanals. Hierdurch ergibt sich der Vorteil, dass die gesamte Luft, die durch den Luftkanal strömt, gleichmäßig verwirbelt werden kann, und somit eine optimale Wärmeaufnahme der Luft erreicht werden kann.

Des Weiteren weist die zumindest eine Barriere eine Rampe auf, die in Richtung des Luftstroms ansteigt. Das heißt, dass beispielsweise eine Steigung vorgesehen sein kann, durch die untere Luftschichten des Luftstroms nach oben geführt werden, wodurch es zu einer verstärkten Verwirbelung der Luft kommen kann. Als Rampe kann beispielsweise eine gerade Steigung mit einem Steigungswinkel von 25 bis 75 Grad vorgesehen sein, die Rampe kann jedoch auch eine Kreisform oder Parabelform aufweisen. Hierdurch ergibt sich der Vorteil, dass eine bessere Luftverwirbelung und damit eine verbesserte Kühlleistung erreicht werden kann.

Durch die Erfindung ergibt sich der Vorteil, dass die Kühlleistung der Ladevorrichtung verbessert werden kann, wodurch ein schnellerer Aufladvorgang des mobilen Endgeräts erreicht werden kann.

Zu der Erfindung gehören auch ausführungsformen, durch die sich zusätzliche Vorteile ergeben.

Eine Ausführungsform sieht vor, dass die zumindest eine Barriere als eine Erhebung ausgebildet ist, die eine zweite vorbestimmte Höhe aufweist, wobei die zweite vorbestimmte Höhe kleiner als die erste vorbestimmte Höhe ist. Mit anderen Worten kann auf dem Auflagebereich in dem Luftkanal eine weitere Erhebung vorgesehen sein, die als Barriere dient und die kleiner als die zwei in Richtung der Länge des Auflagebereichs verlaufenden Erhebungen ist. Somit können Luftschichten einer laminaren Strömung der Luft, die durch den Luftkanal strömt, abgebremst werden, wodurch es zu Verwirbelungen kommen kann, die eine höhere Wärmeaufnahme und somit einen höheren Wärmeabtransport aufweisen können.

Vorzugsweise ist vorgesehen, dass die zweite vorbestimmte Höhe eine Höhe in einem Bereich von 20 Prozent bis 70 Prozent der ersten vorbestimmten Höhe aufweist, insbesondere eine Höhe in einem Bereich von 40 Prozent bis 60 Prozent der ersten vorbestimmten Höhe. Das heißt, dass bei einer ersten vorbestimmten Höhe von beispielsweise 1,2 Millimeter die zweite vorbestimmte Höhe in einem Bereich von 0,24 Millimeter bis 0,84 Millimeter liegen kann, insbesondere in einem Bereich von 0,48 Millimeter bis 0,72 Millimeter. Insbesondere konnte festgestellt werden, dass ab einer Höhe von 20 Prozent eine gewünschte Luftverwirbelung auftritt und bei einer Höhe von bis zu 70 Prozent der ersten vorbestimmten Höhe ein Luftstau in dem Luftkanal vermieden werden kann, wobei sich ein Luftstau negativ auf einen Wärmeabtransport auswirken würde. Eine höchste Effizienz kann in einem Bereich von 40 Prozent bis 60 Prozent der ersten vorbestimmten Höhe gezeigt werden.

Eine weitere Ausführungsform sieht vor, dass die zumindest eine Barriere in einem Bereich einer Induktionsspule der Ladeelektronik angeordnet ist. Bei einem Aufladevorgang des elektrischen Energiespeichers kann insbesondere in einem Überschneidungsbereich der Primärspule der Ladeelektronik und der Sekundärspule des mobilen Endgeräts Wärme entstehen. Bei einer Anordnung der Barriere in dem Bereich der Induktionsspule kann die so entstandene Wärme durch die Luftverwirbelungen besser aufgenommen und abtransportiert werden. Dies hat den Vorteil, dass in dem Überschneidungsbereich die größte Kühlleistung erzeugt werden kann.

Eine weitere Ausführungsform sieht vor, dass die Ladevorrichtung eine Luftfördereinrichtung aufweist, Luft durch die mindestens eine Lufteintrittsöffnung anzusaugen und die angesaugte Luft durch die mindestens eine Luftaustrittsöffnung auszublasen und/oder wobei die Lufteintrittsöffnung der Ladevorrichtung an einer Klimaanlage des Kraftfahrzeugs angeschlossen ist, wobei die Klimaanlage dazu ausgebildet ist, Luft in die Lufteintrittsöffnung einzuleiten und durch die Luftaustrittsöffnung auszublasen. Mit anderen Worten kann die Ladevorrichtung eine eigene Luftfördereinrichtung, wie beispielsweise einen Ventilator oder Lüfter, aufweisen, die Luft in die Lufteintrittsöffnung ansaugen kann und anschließend die angesaugte Luft durch die Luftaustrittsöffnung in den Luftkanal ausblasen kann.

Alternativ oder zusätzlich kann die Ladevorrichtung in dem Kraftfahrzeug auch mit einer Klimaanlage des Kraftfahrzeugs verbunden sein, wobei die Klimaanlage die Luft in die Lufteintrittsöffnung entweder alleine oder durch die Luftfördereinrichtung unterstützt einblasen kann, wobei die eingeblasene Luft anschließend durch die Luftaustrittsöffnung in den Luftkanal geleitet werden kann. Durch diese Ausführungsform ergibt sich der Vorteil, dass ein Luftstrom erzeugt werden kann, der den Luftkanal durchströmen kann und somit eine Kühlung für das mobile Endgerät bereitgestellt werden kann. Vorzugsweise kann auch vorgesehen sein, dass zusätzlich ein Kühlelement in dem Gehäuse der Ladevorrichtung vorgesehen ist, das die in das Gehäuse eintretende Luft herunterkühlt. Insbesondere kann auch die Luft von der Klimaanlage des Kraftfahrzeugs vor Eintritt in die Lufteintrittsöffnung heruntergekühlt sein.

Eine weitere Ausführungsform sieht vor, dass die zumindest eine Barriere zumindest bereichsweise ein Erhebungsmuster aufweist, das ein grafisches Symbol bildet. Mit anderen Worten kann als Barriere bereichsweise ein Erhebungsmuster bereitgestellt sein, das von außen betrachtet ein grafisches Symbol, das heißt eine grafische Kennzeichnung, darstellen kann. Beispielsweise kann das grafische Symbol eine Funktion der Ladevorrichtung anzeigen, wie zum Beispiel eine grafische Kennzeichnung für kabelloses Laden, für eine Nahfeldkommunikation (NFC) und/oder für eine Datenkoppelfunktion (WLAN, Bluetooth). Durch diese Ausführungsform ergibt sich der Vorteil, dass die Barriere neben der Verwirbelungsfunktion für Luft einem Benutzer einen Hinweis auf zusätzliche Funktionen der Ladevorrichtung anzeigen kann. Im einfachsten Fall kann dem Benutzer beispielsweise der Auflagebereich zum kabellosen Laden des mobilen Endgeräts angezeigt werden. Auch kann durch das Erhebungsmuster eine optimale Positionierung des mobilen Endgeräts angezeigt werden, wodurch die Kühlleistung weiter verbessert werden kann. Erfindungsgemäß ist auch ein Kraftfahrzeug mit einer Ladevorrichtung nach einem der vorhergehenden Ausführungsformen vorgesehen. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine perspektivische Ansicht einer Ladevorrichtung nach einer beispielhaften Ausführungsform;
- Fig. 2: eine schematische Querschnittsansicht einer Ladevorrichtung nach einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

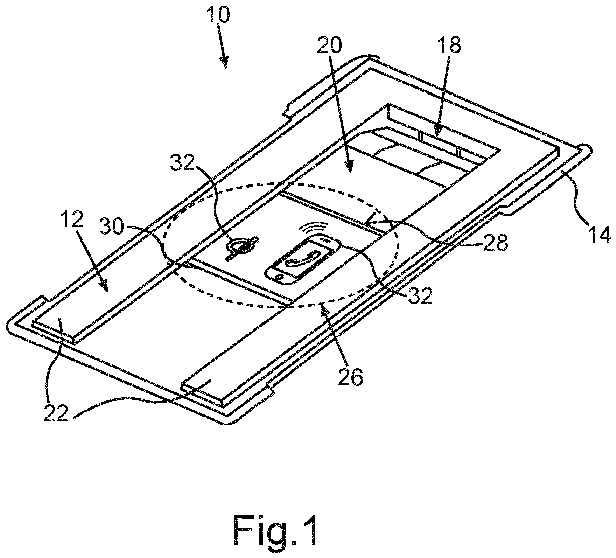

In Fig. 1 ist eine perspektivische Ansicht einer Ladevorrichtung 10, insbesondere auf einen Auflagebereich 12 zum Auflegen eines mobilen Endgeräts (in Fig. 1 nicht gezeigt), zum drahtlosen Aufladen eines elektrischen Energiespeichers des mobilen Endgeräts dargestellt. Die Ladevorrichtung 10 kann vorzugsweise in einer Mittelkonsole eines Kraftfahrzeugs angeordnet sein und der Auflagebereich 12 kann eine Oberseite eines Gehäuses 14 der Ladevorrichtung 10 sein, in welchem eine Ladeelektronik zum Aufladen des mobilen Endgeräts bereitgestellt ist.

Das Gehäuse 14 kann mindestens eine Lufteintrittsöffnung 16 (in Fig. 1 nicht gezeigt) aufweisen, die sich beispielsweise an einer Seite und/oder Unterseite des Gehäuses befinden kann. Ferner kann mindestens eine Luftaustrittsöffnung 18 vorgesehen sein, die in dem Auflagebereich 12 angeordnet ist und die dazu ausgebildet ist, Luft in einen Luftkanal 20 auszublasen.

Der Luftkanal 20 kann zu den Seiten hin von zwei sich in Richtung der Länge des Auflagebereichs erstreckende Erhebungen 22 definiert sein, die parallel zueinander mit einem vorbestimmten Abstand angeordnet sind. Des Weiteren können sich die beiden Erhebungen 22 von dem Auflagebereich 12 durch eine jeweilige erste vorbestimmte Höhe abgrenzen. Beispielsweise kann die erste vorbestimmte Höhe bis zu fünf Millimeter betragen. Des Weiteren kann der Luftkanal 20 nach oben hin durch das mobile Endgerät, das auf die beiden Erhebungen 22 aufgelegt werden kann, abgegrenzt werden.

Mit einer solchen Ladevorrichtung 10 ist es bereits möglich, Wärme, die bei einem drahtlosen Aufladen des elektrischen Energiespeichers des mobilen Endgeräts entstehen kann, über Luft, die durch den Luftkanal 20 strömt, abzuführen. Durch Untersuchungen konnte jedoch festgestellt werden, dass durch eine Anordnung zumindest einer Barriere 26 in dem Luftkanal 20 die Kühlleistung deutlich erhöht werden kann.

Mit der Barriere 26 ist insbesondere eine Erhebung mit einer zweiten vorbestimmten Höhe gemeint, wobei die zweite vorbestimmte Höhe kleiner als die erste vorbestimmte Höhe sein kann. Insbesondere kann die zweite vorbestimmte Höhe eine Höhe von 10 bis 80 Prozent der ersten vorbestimmten Höhe aufweisen, vorzugsweise 45 bis 55 Prozent. Hierdurch kann erreicht werden, dass sich ein Luftstrom der Luft verwirbelt, wodurch die Luft mehr Wärme vom mobilen Endgerät 24 aufnehmen und somit abführen kann. Beispielsweise kann die erste vorbestimmte Höhe der beiden Erhebungen 22 vier Millimeter betragen und die Barriere kann als zweite vorbestimmte Höhe 50 Prozent der ersten vorbestimmen Höhe aufweisen, also zwei Millimeter.

Vorzugsweise kann die Barriere 26 eine erste Verwirbelungserhebung 28 aufweisen, die senkrecht zu den sich in Richtung der Länge des Auflagebereichs erstreckenden Erhebungen 22 angeordnet ist und sich in der Breite über den gesamten vorbestimmten Abstand des Luftkanals erstreckt. Hierdurch kann erreicht werden, dass sich die Luft im Luftkanal gleichmäßig über die gesamte Breite des Luftkanals verwirbelt, wodurch eine bessere Wärmeaufnahme der Luft erreicht werden kann. Zusätzlich können auch eine oder mehrere weitere Verwirbelungserhebungen 30 im Luftkanal vorgesehen sein, die weitere Verwirbelungen erzeugen.

Die Barriere 26 kann vorzugsweise auch eine oder mehrere Erhebungsmuster 32 aufweisen, die beispielsweise ein grafisches Symbol, insbesondere eine grafische Kennzeichnung einer Kundenfunktion, wie zum Beispiel ein Symbol zum kabellosen Laden, ein WLAN-Symbol oder ein Nahfeldkommunikationssymbol, umfassen können. Hierdurch ergibt sich der Vorteil, dass sich neben einer zusätzlichen Verwirbelung von Luft auch technische Informationen der Ladevorrichtung 10 darstellen lassen.

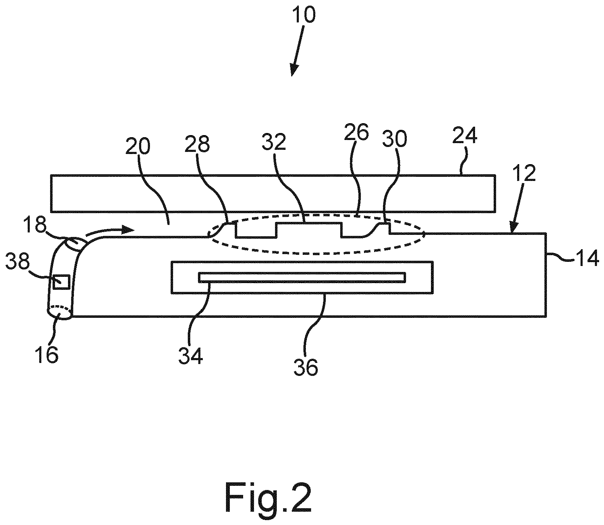

In Fig. 2 ist eine Querschnittsansicht einer Ladevorrichtung 10 gemäß einer beispielhaften Ausführungsform gezeigt, wobei der Querschnitt in Längsrichtung mittig durch die Ladevorrichtung 10 verläuft. In dieser Darstellung ist das mobile Endgerät 24 auf dem Auflagebereich 12 des Gehäuses 14 aufgelegt, insbesondere auf den sich in Richtung der Länge des Auflagebereichs erstreckenden Erhebungen 22, die in dieser Fig. nicht dargestellt sind.

In der Ladevorrichtung 10 kann vorzugsweise vorgesehen sein, dass die Barriere 26 in einem Bereich einer Induktionsspule 34 der Ladeelektronik 36 auf dem Auflagebereich 12 angeordnet ist. Das hat den Vorteil, dass die Luftverwirbelungen in einem Bereich erzeugt werden, in dem die höchste Wärmeentwicklung auftreten kann und somit eine verbesserte Kühlleistung erreicht werden kann. Zusätzlich kann vorgesehen sein, dass die Barriere 26, insbesondere die erste Verwirbelungserhebung 28, eine Rampe in Richtung des Luftstroms der ausgeblasenen Luft aufweist, das heißt, dass die erste Verwirbelungserhebung 28 beispielsweise in Richtung des Luftstroms ansteigen kann. Der Anstieg der Rampe kann beispielsweise durch eine Linearfunktion, eine Potenzfunktion oder eine Exponentialfunktion beschrieben sein. Durch diese Rampe ergibt sich der Vorteil, dass eine stärkere Verwirbelung der Luft erreicht werden kann und somit eine verbesserte Kühlleistung erzeugt werden kann.

Der Luftstrom der Luft, die durch den Luftkanal 20 strömt und der von der Luftaustrittsöffnung 18 in den Luftkanal 20 ausgeblasen wird, kann beispielsweise durch eine Luftfördereinrichtung 38 über die mindestens eine Lufteintrittsöffnung 16 angesaugt werden, bevor sie durch die Luftaustrittsöffnung 18 ausgeblasen wird. Alternativ oder zusätzlich kann die Lufteintrittsöffnung 16 auch an einer Klimaanlage des Kraftfahrzeugs (nicht gezeigt) angeschlossen sein, die die Luft, vorzugsweise durch die Klimaanlage vorgekühlt, in die mindestens eine Lufteintrittsöffnung 16 einleiten kann, bevor sie zur Kühlung des mobilen Endgeräts 24 in den Luftkanal 20 ausgeblasen wird.

Insgesamt zeigen die Beispiele, wie durch die Erfindung ein effektiver Wärmeabtransport bei induktiv geladenen mobilen Endgeräten bereitgestellt werden kann.

## Patentansprüche

1. Ladevorrichtung (10) zum drahtlosen Aufladen eines elektrischen Energiespeichers eines mobilen Endgeräts (24) für ein Kraftfahrzeug, wobei die Ladevorrichtung (10) aufweist
- eine Ladeelektronik (36); und
- ein Gehäuse (14), in welchem die Ladeelektronik (36) angeordnet ist;
- wobei das Gehäuse (14) einen Auflagebereich (12) zum Auflegen des mobilen Endgeräts (24) aufweist;
- wobei der Auflagebereich (12) mindestens zwei sich in Richtung der Länge des Auflagebereichs erstreckende Erhebungen (22) mit einer jeweiligen ersten vorbestimmten Höhe aufweist, die parallel mit einem vorbestimmten Abstand zueinander angeordnet sind und bei aufgelegtem mobilen Endgerät (24) einen Luftkanal (20) bilden;
- wobei das Gehäuse (14) mindestens eine Lufteintrittsöffnung (16) und mindestens eine Luftaustrittsöffnung (18) aufweist;
- wobei die Luftaustrittsöffnung (18) in dem Auflagebereich (12) angeordnet und dazu ausgebildet ist, Luft in den Luftkanal (20) auszublasen;
**dadurch gekennzeichnet, dass**
- zumindest eine Barriere (26) in dem Luftkanal (20) angeordnet ist, die dazu ausgebildet ist, die in den Luftkanal (20) ausgeblasene Luft zu verwirbeln;
- wobei die zumindest eine Barriere (26) eine erste Verwirbelungserhebung (28) umfasst, die senkrecht zu den sich in Richtung der Länge des Auflagebereichs erstreckenden Erhebungen (22) angeordnet ist;
- wobei die erste Verwirbelungserhebung (28) sich in der Breite über den vorbestimmten Abstand des Luftkanals erstreckt; und
- wobei die zumindest eine Barriere (26) eine Rampe aufweist, die in Richtung des Luftstroms ansteigt.

2. Ladevorrichtung (10) nach Anspruch 1, wobei die zumindest eine Barriere (26) als eine Erhebung ausgebildet ist, die eine zweite vorbestimmte Höhe aufweist, wobei die zweite vorbestimmte Höhe kleiner als die erste vorbestimmte Höhe ist.

3. Ladevorrichtung (10) nach Anspruch 2, wobei die zweite vorbestimmte Höhe eine Höhe in einem Bereich von 20 % bis 70 % der ersten vorbestimmten Höhe aufweist, insbesondere in einem Bereich von 40 % bis 60 % der ersten vorbestimmten Höhe.

4. Ladevorrichtung (10) nach einem der vorhergehenden Ansprüche, wobei die zumindest eine Barriere (26) in einem Bereich einer Induktionsspule (34) der Ladeelektronik (36) angeordnet ist.

5. Ladevorrichtung (10) nach einem der vorhergehenden Ansprüche, wobei die Ladevorrichtung (10) eine Luftfördereinrichtung (38) aufweist, die dazu ausgebildet ist, Luft durch die mindestens eine Lufteintrittsöffnung (16) anzusaugen und die angesaugt Luft durch die mindestens eine Luftaustrittsöffnung (18) auszublasen und/oder wobei die Lufteintrittsöffnung (16) der Ladevorrichtung an einer Klimaanlage des Kraftfahrzeugs angeschlossen ist, wobei die Klimaanlage dazu ausgebildet ist, Luft in die Lufteintrittsöffnung (16) einzuleiten und durch die Luftaustrittsöffnung (18) auszublasen.

6. Ladevorrichtung (10) nach einem der vorhergehenden Ansprüche, wobei die zumindest eine Barriere (26) zumindest bereichsweise ein Erhebungsmuster (32) aufweist, das ein grafisches Symbol bildet.

7. Kraftfahrzeug mit einer Ladevorrichtung (10) nach einem der vorhergehenden Ansprüche.

## Claims

1. Charging device (10) for wirelessly charging an electric energy store of a mobile terminal (24) for a motor vehicle, wherein the charging device (10) has
- charging electronics (36); and
- a housing (14) in which the charging electronics (36) are arranged;
- wherein the housing (14) has a support area (12) for supporting the mobile terminal (24);
- wherein the support area (12) has at least two raised areas (22) that extend in the direction of the length of the support region and have a respective first predetermined height, which raised areas are arranged parallel to one another with a predetermined spacing and form an air channel (20) when the mobile terminal (24) is supported;
- wherein the housing (14) has at least one air inlet opening (16) and at least one air outlet opening (18);
- wherein the air outlet opening (18) is arranged in the support area (12) and is configured to blow air into the air channel (20);
**characterised in that**
- at least one barrier (26) is arranged in the air channel (20) and is configured to swirl the air discharged into the air channel (20);
- wherein the at least one barrier (26) comprises a first swirling raised area (28), which is arranged perpendicular to the raised areas (22) that extend in the direction of the length of the support area;
- wherein the first swirling raised area (28) extends in width across the predetermined spacing of the air channel; and
- wherein the at least one barrier (26) has a ramp, which rises in the direction of air flow.

2. Charging device (10) according to claim 1, wherein the at least one barrier (26) is configured as a raised area having a second predetermined height, wherein the second predetermined height is smaller than the first predetermined height.

3. Charging device (10) according to claim 2, wherein the second predetermined height has a height in a range from 20 % to 70 % of the first predetermined height, in particular in a range from 40 % to 60 % of the first predetermined height.

4. Charging device (10) according to any one of the preceding claims, wherein the at least one barrier (26) is arranged in an area of an induction coil (34) of the charging electronics (36).

5. Charging device (10) according to any one of the preceding claims, wherein the charging device (10) comprises an air conveying device (38), which is configured to draw air through the at least one air inlet opening (16) and to blow the drawn-in air out through the at least one air outlet opening (18) and/or wherein the air inlet opening (16) of the charging device is connected to an air conditioning system of the motor vehicle, wherein the air conditioning system is configured to introduce air into the air inlet opening (16) and to blow it out through the air outlet opening (18).

6. Charging device (10) according to any one of the preceding claims, wherein the at least one barrier (26) has, at least in part, a raised pattern (32) forming a graphic symbol.

7. Motor vehicle comprising a charging device (10) according to any one of the preceding claims.

## Revendications

1. Dispositif chargeur (10) pour recharger sans fil un accumulateur d'énergie électrique d'un terminal mobile (24) pour un véhicule automobile, lequel dispositif chargeur (10) comporte
- une électronique de chargement (36) ; et
- un corps (14), dans lequel est placée l'électronique de chargement (36) ;
- dans lequel le corps (14) comporte une zone de support (12) pour poser le terminal mobile (24) ;
- dans lequel la zone de support (12) comporte au moins deux bosses (22) d'une première hauteur prédéterminée respective qui s'étendent dans le sens de la longueur de la zone de support, qui sont disposées parallèlement et à une distance prédéterminée l'une de l'autre et qui forment un canal d'air (20) lorsque le terminal mobile (24) est posé ;
- dans lequel le corps (14) comporte au moins un orifice d'entrée d'air (16) et au moins un orifice de sortie d'air (18) ;
- dans lequel l'orifice de sortie d'air (18) est disposé dans la zone de support (12) et est conçu pour souffler de l'air dans le canal d'air (20) ;
**caractérisé en ce que**
- au moins une barrière (26) est agencée dans le canal d'air (20), laquelle est conçue pour faire tourbillonner l'air soufflé dans le canal d'air (20) ;
- dans lequel l'au moins une barrière (26) comprend une première bosse de tourbillonnement (28) qui est disposée perpendiculairement aux bosses (22) qui s'étendent dans le sens de la longueur de la zone de support ;
- dans lequel la première bosse de tourbillonnement (28) s'étend dans le sens de la largeur au-delà de la distance prédéterminée du canal d'air ; et
- dans lequel l'au moins une barrière (26) comporte une rampe qui monte dans la direction du flux d'air.

2. Dispositif chargeur (10) selon la revendication 1, dans lequel l'au moins une barrière (26) est conçue comme une bosse qui présente une deuxième hauteur prédéterminée, laquelle deuxième hauteur prédéterminée est plus petite que la première hauteur prédéterminée.

3. Dispositif chargeur (10) selon la revendication 2, dans lequel la deuxième hauteur prédéterminée présente une hauteur dans une plage allant de 20 % à 70 % de la première hauteur prédéterminée, en particulier dans une plage allant de 40 % à 60 % de la première hauteur prédéterminée.

4. Dispositif chargeur (10) selon l'une des revendications précédentes, dans lequel l'au moins une barrière (26) est placée dans une zone d'une bobine d'induction (34) de l'électronique de chargement (36).

5. Dispositif chargeur (10) selon l'une des revendications précédentes, dans lequel le dispositif chargeur (10) comporte un dispositif de transport d'air (38) qui est conçu pour aspirer de l'air à travers l'au moins un orifice d'entrée d'air (16) et pour souffler l'air aspiré à travers l'au moins un orifice de sortie d'air (18) et/ou dans lequel l'orifice d'entrée d'air (16) du dispositif chargeur est raccordé à une installation de climatisation du véhicule automobile, dans lequel l'installation de climatisation est conçue pour introduire de l'air dans l'orifice d'entrée d'air (16) et pour le souffler à travers l'orifice de sortie d'air (18).

6. Dispositif chargeur (10) selon l'une des revendications précédentes, dans lequel l'au moins une barrière (26) comporte au moins à un endroit un motif de bosse (32) qui constitue un symbole graphique.

7. Véhicule automobile avec un dispositif chargeur (10) selon l'une des revendications précédentes.
